# EUROPEAN PATENT APPLICATION

(11) **EP 1 939 150 A1**
(43) Date of publication of application: **02.07.2008**
(21) Application number: 06356155.9
(22) Date of filing: 27.12.2006
(51) Int. Cl.: C03C 27/04

(54) **Sol-gel sealants for liquid-based optical devices**

(71) Applicant: Varioptic, 69007 Lyon (FR)
(72) Inventor: Lours, Thierry, 34670 Baillargues (FR); Chaput Frédéric, 69003 Lyon (FR)
(74) Representative: Myon, Gérard Jean-Pierre

(57) **Abstract**

The present invention relates to the use of an organo-silicated hybrid sealant material obtained by sol-gel technology for sealing the window of a liquid-based optical device onto the packaging of said device, and the process for sealing said window on said packaging using said organo-silicated hybrid sealant material.
The invention also pertains to a liquid-based optical, for example a liquid-based optical device driven by electrowetting, comprising an organo-silicated hybrid sealant material sealing the window onto the packaging of said device.

## Description

The invention relates to the use of organo-mineral hybrid materials, typically sol-gel hybrid materials, for sealing liquid-based optical devices, particularly optical devices including a liquid-liquid interface moveable by electrowetting, particularly liquid-based optical lenses driven by electrowetting. The invention also relates to a liquid-based optical device, sealed using organo-mineral hybrid materials.

Liquid-based optical devices are devices comprising a liquid-liquid interface forming a meniscus, the shape of the meniscus being controlled by application of a voltage, and capable of modifying an incident beam to achieve a specific optical function. They include variable focus liquid lenses, optical diaphragms, optical zooms, ophthalmic devices and are increasingly proposed in a number of applications and apparatuses, such as for example cameras, video cameras, cell phones, telemeters, endoscopes, dental videos and the like. Particularly, optical electrowetting devices are liquid-based devices wherein the liquid-liquid interface is moveable by electrowetting.

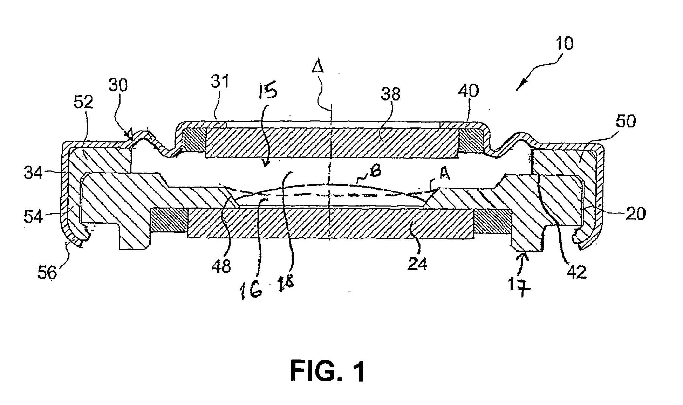

Figure 1 reproduces Figure 4 of European Patent Application EP1662276, and illustrates a variable focal length lens 10 according to one example of the prior art. Lens 10 is formed by a cell with two transparent windows 24, 38 facing each other and parallel to one another, and delimiting, at least in part, an internal volume 15 containing two immiscible liquids 16, 18, with different optical indices, defining an optical interface A, B in the form of a meniscus where they meet. The liquids 16, 18 have substantially equal densities, and one is preferably an insulating liquid, for example comprising oil or an oily substance, and the other is preferably a conducting liquid comprising for example an aqueous solution. The windows are for example transparent plates, made of an optical transparent material, generally glass or any transparent plastic material, preferably glass. Whilst planar windows are shown, these windows could be fixed lens, centred on an optical axis (Δ) of the variable focus lens 10. Lens 10 further comprises a cap 30 connected to a transparent window 38 and comprising a first cylindrical side wall 34. Lens 10 also comprises a body 17 having a symmetry of revolution about the optical axis (Δ) of the lens. Body 17 is connected to transparent window 24 and comprises a second cylindrical side wall 20 of a diameter smaller than the diameter of the first cylindrical wall. Cap 30 forms a first electrode and body 17 comprises a second electrode. A gasket 50 is provided to ensure the tightness of the lens structure, positioned such that it is compressed between the first and second cylindrical side walls.

Due to the electrowetting effect, it is possible, by applying a voltage between the cap 30 and body 17, to change the curvature of the refractive interface between the first liquid 16 and the second liquid 18, for example, from an initial concave shape as shown by dashed line A, to a convex shape as shown by solid line B. Thus rays of light passing through the cell perpendicular to the windows 24, 38 in the region of the refractive interface A, B will be focused more or less depending on the voltage applied.

The windows are sealed to the remainder of the cell ("packaging") in order to tightly and hermetically close the cell. The sealing of the transparent material forming the window and the packaging, generally made of metal, has been the objects of numerous searches, especially to ensure the tightness of the seal between the window and the packaging, no chemical contamination of the liquids by the sealant, the resistance of the assembly to internal pressure transmitted by the fluids when the lens is used at high temperature, and the assembly of window on packaging with alignment and tilt compatible with optical specifications.

Today several solutions are proposed, among which might be cited:
- the use of a commercial organic glue, such as epoxy (mono or bi compound), silicone, UV reticulated, etc.,
- the use of a mineral solder glass, which is fused at moderate temperature between glass and metal,

The use of a fused mineral solder glass imposes a quite complicated working out, which is time consuming and costly. On the other hand, the use of organic (or synthetic) glue has many drawbacks, namely because the sealant is in contact with the conductive liquid, and becomes corroded by said liquid over time. More resistant sealants to corrosion are often too rigid and do not present a satisfying mechanical integrity, that is they tend to crack over time, especially under temperature variations, mostly, since metal and glass have different coefficients of thermal expansion. Most often, it is necessary to use two different glues, a first one to ensure a solid sealing and a second one to protect the first glue against the corrosion of the liquids.

Therefore one objective of the present invention is to overcome the known issues regarding the sealing of the window of a liquid-based optical device onto the packaging of said optical device.

Thus an objective of the present invention consists in using one single sealant aiming at sealing the window of a liquid-based optical device onto the packaging of said optical device.

Another objective of the invention is to provide a sealant for a liquid-based optical device, which is lead-free.

Another objective of the invention is to provide a sealant for a liquid-based optical device, which at the same time presents good mechanical integrity, and does not interact with the liquids of said optical device, that is the sealant is inert towards the liquids of the device.

As a still further objective of the present invention, there is provided a sealant for a liquid-based optical device, wherein the mechanical integrity and the inertia of said sealant do substantially not vary upon or after thermal and/or electrical stress.

Still a further objective is to provide such a sealant for sealing the window of a liquid-based optical device onto the packaging of said optical device.

The inventors have now discovered that these and other objectives are met in whole or in part with the use according to the present invention.

In a first aspect, the invention relates to the use of an organo-silicated hybrid sealant material obtained by sol-gel technology for sealing the window of a liquid-based optical device onto the packaging of said device.

According to an embodiment, the window of the liquid-based optical device is a glass window, wherein glass may or may not be treated, such as with a functional coating such as ITO (indium/tin oxide), an anti-reflective layer, an UV or IR protective layer, and the like. The window may also be made of one or more transparent plastic material(s) known in the art. Such transparent plastic materials are generally surface-treated for use in liquid-based optical devices.

According to another embodiment, the packaging of the liquid-based optical device is a metallic casing, for example stainless steel, aluminium, anodized aluminium, brass (with or without anodic coating such as nickel, ceramics), and the like.

According to a preferred embodiment, the organo-silicated hybrid sealant material is an organo-siloxane hybrid material obtained by the sol-gel technology. This technology and more precisely the synthesis of organo-mineral hybrid materials is described for example in ARAGO 17, Matériaux Hybrides, Observatoire Français des Techniques Avancées, Masson, 1996).

The inventors have now discovered that such hybrid organo-mineral materials are particularly well adapted to the sealing of the window, preferably glass window, of a liquid-based optical device, onto the packaging, preferably metallic packaging, of such device.

Indeed, such a hybrid material is insensitive to the liquids used in the liquid-based optical device; therefore no further protection is required. This insensitivity is brought together by the hydrophobic feature and the chemical resistance of this hybrid material.

Further, because of the chemicals contained within the hybrid material, the latter is able to give chemical covalent bond with both glass and metal which makes it suitable for sealing these materials together.

Moreover, the hybrid material is processed at low temperature (typically T < 200°C), and is therefore fully compatible with the other materials of the assembly in terms of thermal behaviour (differential expansion due to different thermal coefficient of expansion). Because of this low temperature process, there is hardly any, or even no, deformation of the glass window: the optical specifications are consequently easily reached.

Physical-chemical properties as well as mechanical characteristics of the seal can be adapted easily by a change of the chemical nature of the precursor. Therefore, the sol-gel process is very flexible and can be adapted to various kinds of liquids and lens designs.

As stated above, the organo-mineral hybrid materials used in the present invention are obtained from modified alkoxysilanes by the so-called "sol-gel process". These materials are said hybrid because they contain both organic and mineral parts.

According to a preferred embodiment, the organo-mineral hybrid material for use in the present invention is obtained after hydrolysis-condensation (according to the so called "sol-gel" method described above) of one or more modified alkoxysilanes that can be represented by the following formula (1):

F-Sp-Si(OR)₃ (1)

wherein:
- F is an organic chemical polymerisable and/or reactive function with silanol to participate to the gel network (e.g. by condensation) and with both the metallic surface and the glass surface in order to establish a bond;
- Sp is a spacer of variable length, linked to the Si (Silicon) atom via a silicon-carbon bond; and
- the R groups are identical or different and represent a linear or branched C₁-C₆ alkyl group such as methyl, ethyl, propyl, butyl, pentyl, hexyl, or their position isomers, preferably methyl, ethyl, propyl, butyl, or their position isomers.

More particularly, F is a polymerisable organic chemical function which also enhances the adhesion both on metal and glass. F is advantageously chosen from epoxy, NH₂, acrylate and methacrylate functions.

The spacer Sp between the Si atom and F function may be any spacer known in the art, and typically is a linear or branched C₁-C₁₀ alkylene group, such as -(CH₂)-, -(C₂H₄)-,
- (C₃H₆)-, -(C₄H₈)- or an aromatic group, such as -(C₆H₄)-, or a combination of these groups, optionally interrupted by one or more heteroatoms chosen from among O, N, S or P. This spacer allows the control of the characteristics of the final hybrid material such as, mechanical behaviour, hydrophobicity, etc.

Preferred compounds of formula (1) are those presenting independently one, preferably two, more preferably three, advantageously four, of the following characteristics:
- F is an epoxy function;
- Sp is a linear or branched C₁-C₁₀ alkylene group, preferably -(CH₂)-, -(C₂H₄)-, -(C₃H₆)-, -(C₄H₈)-, optionally interrupted by one or more heteroatoms chosen from among O, N, S or P, preferably O;
- The R groups are identical;
- R represents a linear or branched C₁-C₆ alkyl group, preferably methyl or ethyl.

Examples of alkoxysilanes that may be used in the present invention are for example:
1) Examples with F = epoxy

| ***Formula*** | ***Compound name*** | ***Supplier*** |
|---|---|---|
| 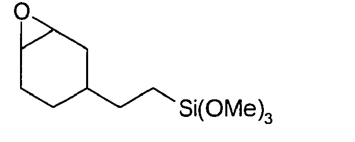 | 2-(3,4-epoxycyclohexyl)ethyltrimethoxysilane | ABCR |
| 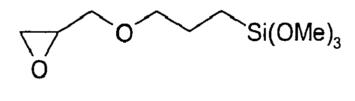 | (3-glycidoxypropyl)trimethoxysilane | ABCR |

2) Examples with F = methacrylates

| ***Formula*** | ***Compound name*** | ***Supplier*** |
|---|---|---|
| 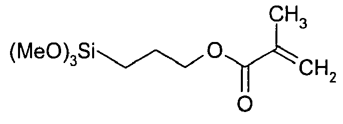 | Methacryloxypropyltrimethoxysilane | ABCR |

Figures below show examples of synthesized alkoxysilanes functionalized with one or two methacrylate groups and with different spacers. The synthesis of these compounds is well documented in literature. 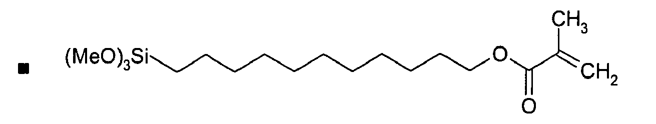 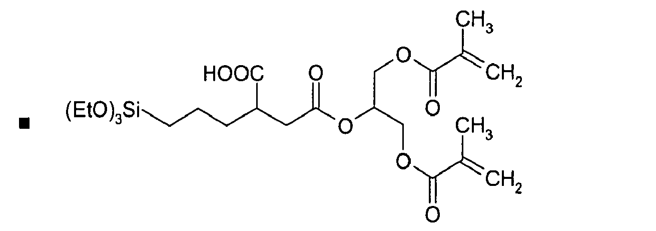 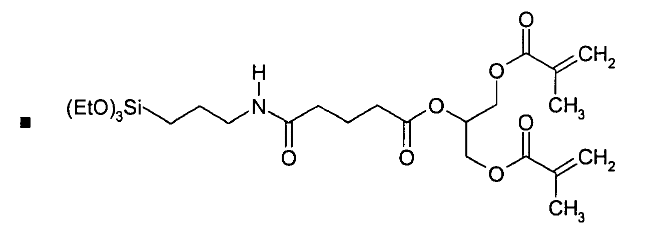 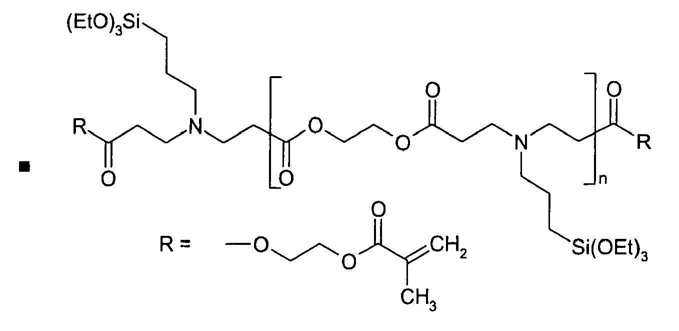 3) Other examples of synthesized alkoxysilanes with different polymerisable groups:

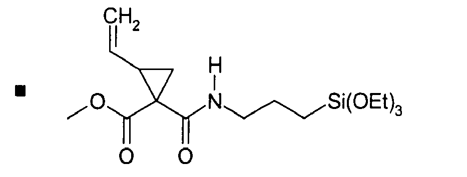

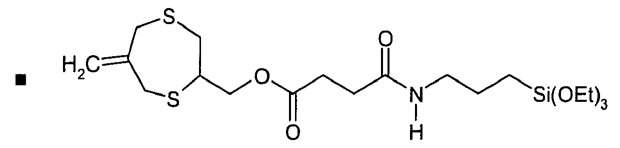

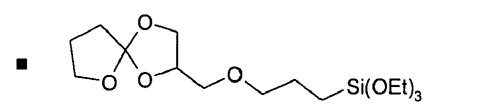

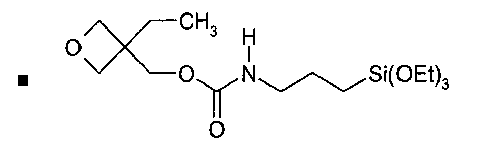

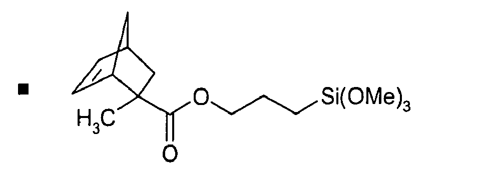

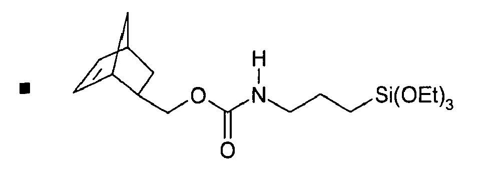

A particularly preferred alkoxysilane is (3-glycidoxypropyl)trimethoxysilane, also known as GLYMO, available at ABCR.

According to an advantageous embodiment of the present invention, the previously described alkoxysilanes of formula (1) may be used in association with one or more di-functional alkoxysilanes represented by the following formula (2):

R'R"-Si(OR)₂ (2)

wherein:
- the R groups are identical or different and represent a linear or branched C₁-C₆ alkyl group such as methyl, ethyl, propyl, butyl, pentyl, hexyl, or their position isomers, preferably methyl, ethyl, propyl, butyl, or their position isomers;
- the R' and R" groups which may also be identical or different, represent a linear or branched C₁-C₆ alkyl group such as methyl, ethyl, propyl, butyl, pentyl, hexyl, or their position isomers, preferably methyl, ethyl, propyl, butyl, or their position isomers, or an aromatic group, such as phenyl.

Preferred di-functional alkoxysilanes of formula (2) are those wherein the R groups are identical and represent methyl, ethyl, propyl or butyl and the R' and R" groups are identical and represent methyl, ethyl, propyl or butyl. A particularly preferred di-functional alkoxysilane is dimethyl diethoxysilane, also named DMDES.

Similarly, tri-functional alkoxysilanes may also be used. The relative amounts of alkoxysilane(s), di-functional alkoxysilane(s) and optional tri-functional alkoxysilane(s) may vary in great proportions, depending of the desired stiffness of the resulting gel.

When alkoxysilanes, for example of formula (1) as defined above optionally in association with one or more compounds of formula (2) as defined above, are submitted to (acidic) water, hydrolysis of OR groups occurs to yield silanol groups which partially condense to give siloxane bridges. The obtained solution is commonly called a sol (very small oligomeric species in solution). High condensation rate of silanol groups is generally obtained by applying heat, thereby leading to gelation. The so prepared Si-O-Si network is more or less cross-linked depending on the conditions of the chemical reaction. The F functions may be activated by addition of an appropriate reagent, depending on the nature of the F function, in order to create additional chemical bonds between the activated F functions and the silanol groups (cross-linking reaction). The resulting material is finally an organo-mineral hybrid, transparent, dense, stiff and tight network.

The hybrid materials used in the present invention may also comprise one or more additive, fillers, and the like, conventionally used in the art. Particularly, the hybrid materials may comprise one or more organic and/or inorganic fillers (such as nanoparticles, silsesquioxanes, and the like) in order to modify the physico-chemical properties of the seal.

During the gelation process some of the silanol groups contained in the sol will react with both the silanol groups of the window and the metallic oxides laying at the surface of the packaging. These reactions will lead to a chemical bonding, generally a tight chemical bonding, between the gel (sol) and both the window and the packaging.

In the same way, during the gelation process, F functions contained in the sol will react at the surface of the glass window and of the packaging to lead to tight chemical bondings.

These reactions result in a tight and mechanically strong interface on both sides. Therefore an efficient seal is provided by the hybrid material, wherein the bulk is tight (hydrophobic) and insensitive to liquids, both ends are chemically bonded to the other components of the assembly.

Accordingly, the concentration of the sol before gelation is optimised in order to combine both adequate range of viscosity (easy handling and dispensability, low shrinkage at drying) and acceptable pot life. The concentration of the sol is done by evaporation under vacuum at room temperature in order to evacuate solvent in excess without thermally enhancing too much reticulation of reactive species. After deposition, the final thermal treatment is carried out (thermal and/or photochemical) in order to ensure the tightness of the seal and its final physico-chemical properties such as, but not limited to, the following ones:
- Important polymerisation rate (ensures chemical and mechanical stabilities);
- Absence of cracks within the material, achieved by
   - sufficient concentration of the sol, avoiding low shrinkage during polymerisation and drying;
   - use of sols leading to "soft" visco-elastic materials after gelation in order to accommodate thermo-mechanical stress due to the difference of the thermal coefficient of expansion (TCE) of the various materials of the assembly;
   - Curing temperature as low as possible in order to limit differential expansions;
- Optimum mechanical properties (typical targeted value is equal or greater than about 3.2 N/mm² for a tensile stress abrasion resistance);
- Low or no alteration of the mechanical properties after thermal stress in the presence of liquids ;
- Very low interaction with the conductive phase of the optical electrowetting device.

The present invention also relates to the process of sealing a window of a liquid-based optical device on the packaging of said device, which process comprises the steps of:
a) providing a least one silicon alkoxide precursor diluted in a solvent at a concentration higher than 0.5 mole/L (referred to as "cₒ" concentration in the following);
b) adding acidic water to perform hydrolysis over a period ranging from 1 hour to 3 days, generally for about 24 hours, in a thermostated vessel, at a temperature equal or higher than ambient temperature, until a "sol" is obtained;
c) optionally activating the reactive functions of the sol obtained in step b);
d) optionally concentrating the sol under primary vacuum until a concentration (a silicon atom concentration) of at least 1.5cₒ to 3cₒ is obtained, advantageously until a concentration of about 1.5cₒ to 2cₒ is obtained;
e) dispensing the obtained sol onto at least one part of the packaging, or onto at least one part of the window, or both;
f) positioning the window on the packaging;
g) applying a pressure;
h) allowing to dry until the solvent is substantially or completely removed;
i) curing the sol; and
j) recovering the packaging comprising the sealed window.

In step a) of the above process, the silicon alkoxide precursor advantageously comprises one or more mono-functional alkoxysilane(s), typically of formula (1), and/or one or more di-functional alkoxysilane(s), typically of formula (2), and/or one or more tri-functional alkoxysilane(s), as previously described.

Alkoxysilane(s) is(are) usually diluted in a solvent, typically an alcohol. According to an advantageous embodiment, the silicon alkoxide precursor(s), with or without one or more di-functional alkoxysilanes, is(are) dissolved in an appropriate solvent, such as for example alkyl alcohols, preferably alkyl(C₁-C₆)alcohols, typically ethanol or methanol, particularly methanol.

Acidic water used in step b) for the hydrolysis reaction may be obtained by adding any organic or inorganic, strong or weak, acid to water, until the desired pH value is obtained, typically a pH of 1 to 5, preferably of 1 to 3. Acids that may be used are, as a non limiting list, chosen from among hydrochloric acid, sulphuric acid, and the like, alone or in mixtures. Generally, the molar ratio water/alkoxide(s) ranges from 2 to 10. The skilled in the art will however be able to adapt this ratio, depending on the water acidity and the type of alkoxysilane(s) used.

One or more organic and/or inorganic filler(s), as conventionally used in the art, may also be added during hydrolysis reaction.

Hydrolysis temperature is typically ambient (i.e. room) temperature. Heating may be necessary to initiate/carry out the hydrolysis reaction; temperatures should however not exceed temperatures leading to chemical function degradation.

Activation of the sol may be conducted by any means known by the skilled in the art, and depends on the reactive functions that are present on the silicon alkoxide precursor(s). As illustrative purpose only, aluminium acetyl acetonate is added to the sol in order to activate epoxy functions that will further react with both the silanol groups of the window and the metallic oxides laying at the surface of the packaging, as previously disclosed.

The sol is then optionally (step d)) concentrated by evaporation at room temperature (or at moderate temperature), under vacuum. Concentration is run for a few minutes to a few hours, depending on the level of vacuum applied. As illustrative purpose, concentration is run for about 2 hours, with a vacuum of 1 hPa to 10⁻⁷ hPa. The concentration (solvent evaporation) is stopped when mass (or volume loss) has reached a given value. Typically, concentration should increase by 1.5 to 3, preferably by 1.5 or 2, of the initial concentration, depending on the sol used, in order to increase its viscosity (example of mean value: around 1000 cSt) and to make it dispensable by a standard dispense process.

Once the sol (or gel) is prepared and concentrated, the sol is dispensed on at least one part of the sealing area of the packaging, using any conventional dispense process known in the art, such as, for example, a needle the diameter of which being adapted the viscosity of the sol. For a better tightness of the seal, it is however preferred to dispense the sol on the totality of the sealing area.

Alternatively, the sol may be dispensed on at least one part of the sealing area of the window, or else the sol may be dispensed both on the at least one part of the sealing area of the packaging and on the at least one part of the sealing area of the window.

In another embodiment, the sol may be dispensed on the entire surface of the window. In this case one or more compound(s) with specific properties (UV radiation absorption, ... etc.) can be incorporated in the sol in order to confer specific properties to the sol-gel "glue" on the optical surface.

A variant of the process according to the invention is to deposit the sol by a spin coating technique. In that case, a droplet of the sol is dropped on the rotating window which is already positioned on the packaging. Because of centrifugal forces, the sol feeds the space between the window and the packaging and therefore forms the seal by capillarity effects.

In this case however, a thin layer may remain on the optical surface of the window. The advantage of the spin coating technique is that, an additional functionality, e.g. an optical functionality such IR or UV filter, can be given to the hybrid material, by incorporating into said hybrid material one or more compound(s) with specific properties, as defined above.

According to an embodiment, this additional optical property will be provided by a specific compound inserted in the gel. The insertion of this optical function can be done by various methods:
- grafting the function to the gel network, starting with the appropriate precursors,
- inserting the function in the network as a guest host.

Before curing, the gel is allowed to dry under mild conditions, such as for example, a temperature of between ambient temperature and 60°C, advantageously at a temperature of about 50°C, and for about 10 to about 200 minutes, for example about 30 minutes.

Curing the gel may be conducted in any manner known in the art, however using curing processes that might not interfere, spoil, or deteriorate the whole device, namely the electrowetting device. Curing is thus advantageously realised by heating , for example at a temperature of about 50°C to about 120°C, for example at about 80°C-85°C, for a period of time ranging from about several minutes to several hours, say about 3 hours at 85°C, or alternatively 12 hours at 50°C. The gelation process being thermally activated, the time/temperature couple is important. The skilled in the art will of course be able to adapt the curing conditions, depending on the nature of the sol to be cured.

The drying step as well as the curing step may be both realised using conventional heating devices, such as for example stove or hot plate.

According to a further feature of the present invention, the metallic surface may optionally be prepared according to conventional techniques known by the skilled artisan, in order to improve reactivity of the hybrid material with the metallic surface. Such preparations are, but are not limited to, one or a combination of more than one of the following processes:
- degreasing and activation by a chemical process such as Piranha (H₂SO₄/H₂O₂ solution at 80%/20% v/v, at 80°C as a cleaning bath), sulpho-oxalic acid or sulpho-chromic acid bath,
- degreasing and activation by a physical process, such as O₂ plasma process,
- deposition of oxide particles (typically silica) by flaming or sputtering process,
- coating with a coupling agent able to react with the remaining F groups of the hybrid material.

The use of sol-gel hybrid materials as sealants for the window of optical electrowetting devices onto the packaging of said devices according to the present invention allows the formation of a tight seal, which is not corroded by the various liquids present in such devices, over time, and upon thermal and electric stress. The use of the present invention is therefore particularly adapted for the sealing of a number of optical devices.

Therefore, the use of the present invention is particularly adapted for the sealing of a liquid-based optical device, where the device is sensitive and must be protected from moisture, dust, corrosive atmosphere, etc.

As such, the present invention also relates to a liquid-based optical device, for example an optical electrowetting device, wherein the sealant between the window and the packaging of the device is obtained from a hybrid material of formula (1) as defined above. According to a preferred embodiment, the optical electrowetting device is an optical lens driven by electrowetting.

The liquid-based optical device is for example a variable focus liquid lens, an optical diaphragm, an optical zoom, an ophthalmic device.

In still another aspect, the invention is related to a set or to an apparatus comprising a liquid-based device according to the invention, for example a variable focus liquid lens, and a driver or similar electronic means for controlling said device. In an embodiment, a variable focus liquid lens and the driver or similar electronic means are integrated in the apparatus. In another embodiment, the apparatus comprises several (more than one) lens(es) and at least one driver or similar electronic means. According to a feature, the apparatus comprises means to apply an AC voltage to the conductive fluid. The apparatus may be a camera, a cell phone, an endoscope, a telemeter, a dental video.

The invention is now described with the following examples which are presented as illustration of some specific embodiments and which are not intended to limit the scope of the invention, the scope of which is clearly defined in the appended claims.

### ILLUSTRATIVE EXAMPLES

### Sealing Process

An alcoholic solution of a modified alkoxysilane (solution of GLYMO in methanol; 0.5mole/L to very high concentration values) or a mixture of GLYMO and DMDES in methanol (GLYMO/DMDES molar ratio from 0.5 to very high values) is mixed together with an appropriate amount (for example 2 to 10 moles of water per mole of silicon) of acidic water (0.1N HCl in water) and a specific chemical (for example aluminium acetylacetonate, for epoxy functions) able to activate the F function. The mixture is allowed to react for 24 hours at room temperature. A possible chemical mechanism is given here-below:

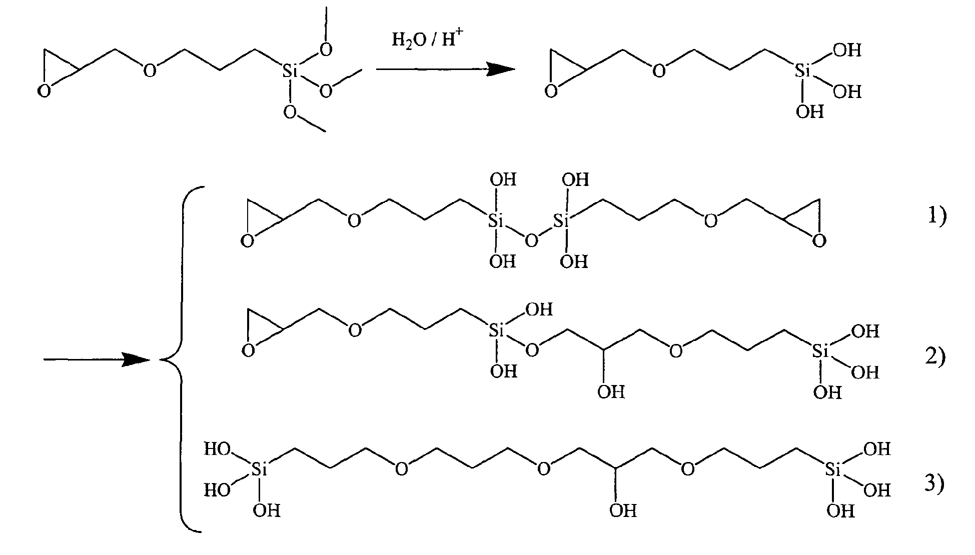

The first step of the here-above mechanism corresponds to the hydrolysis of the OR functions of the precursor. Lines 1), 2) and 3) describe early steps of subsequent condensation of reactive species. Then, aluminium acetyl acetonate is added to the sol in order to activate the epoxy function. The sol is stored at 4°C before use.

The sol is then concentrated by evaporation at room temperature, under a vacuum of about 10⁻³ hPa, for about 2 hours. Concentration is then of about 1.5 cₒ, cₒ being the original concentration of GLYMO in the alcoholic solution. The viscosity of the sol is about 1000 cSt so that it is conveniently dispensable by a standard dispense process, typically a syringe.

The sol is then dispensed on the sealing area (housing) of the packaging, by a conventional dispense process using a needle the diameter of which being adapted the viscosity of the sol. The glass window is placed on/in the housing. The assembly is allowed to dry during about half an hour at 50°C, then placed on a hot plate at about 100°C to complete the gelation (curing) process, for about 3 hours at about 85°C.

After gelation, the window is strongly fixed to the packaging.

Finally such a component can be used for the assembly of a liquid lens in the same way as conventional (organic glue, solder glass) components.

### Thermal and electrical stability of the sealants

Depending of the sol which is used as sealant the initial mechanical strength of the assembly can vary between 3 and 4.6 N/mm² for a tensile solicitation. After aging within liquids (reliability test), this mechanical strength varies between 2.5 and 4 N/mm².

## Claims

1. Use of an organo-silicated hybrid sealant material obtained by sol-gel technology for sealing a window, preferably a glass window, of a liquid-based optical device onto the packaging of said device.

2. The use of claim 1 wherein the packaging of the liquid-based optical device comprises a metallic casing, wherein the metal is chosen from among stainless steel, aluminium, anodized aluminium, brass (with or without anodic coating such as nickel, ceramics), and the like.

3. The use of claim 1 or 2, wherein said organo-silicated hybrid sealant material is obtained from one or more modified alkoxysilanes of formula (1):
F-Sp-Si(OR)₃ (1)
wherein:
- F is an organic chemical polymerisable and/or reactive function with silanol, and is advantageously chosen from epoxy, NH₂, acrylate and methacrylate functions;
- Sp is a spacer of variable length, linked to the Si (Silicon) atom via a silicon-carbon bond, advantageously a linear or branched C₁-C₁₀ alkylene group, preferably chosen from among -(CH₂)-, -(C₂H₄)-, -(C₃H₆)-, -(C₄H₈)- or an aromatic group, such as -(C₆H₄)-, or a combination of these groups, optionally interrupted by one or more heteroatoms chosen from among O, N, S or P; and
- the R groups are identical or different and represent a linear or branched C₁-C₆ alkyl group such as methyl, ethyl, propyl, butyl, pentyl, hexyl, or their position isomers, preferably methyl, ethyl, propyl, butyl, or their position isomers.

4. The use of claim 3, wherein said organo-silicated hybrid sealant material is obtained from one or more compound of formula (1) are those presenting independently one, preferably two, more preferably three, advantageously four, of the following characteristics:
- F is an epoxy function;
- Sp is a linear or branched C₁-C₁₀ alkylene group, preferably -(CH₂)-, -(C₂H₄)-, -(C₃H₆)-, -(C₄H₈)-, optionally interrupted by one or more heteroatoms chosen from among O, N, S or P, preferably O;
- The R groups are identical;
- R represents a linear or branched C₁-C₆ alkyl group, preferably methyl or ethyl.

5. The use of claim 3 or 4, wherein said organo-silicated hybrid sealant material is obtained from (3-glycidoxypropyl)trimethoxysilane (GLYMO).

6. The use of any of claims 3 to 5, wherein the modified alkoxysilane is used in association with one or more di-functional alkoxysilanes represented by the following formula (2):
R'R"-Si(OR)₂ (2)
wherein:
- the R groups are identical or different and represent a linear or branched C₁-C₆ alkyl group such as methyl, ethyl, propyl, butyl, pentyl, hexyl, or their position isomers, preferably methyl, ethyl, propyl, butyl, or their position isomers;
- the R' and R" groups which may also be identical or different, represent a linear or branched C₁-C₆ alkyl group such as methyl, ethyl, propyl, butyl, pentyl, hexyl, or their position isomers, preferably methyl, ethyl, propyl, butyl, or their position isomers, or an aromatic group, such as phenyl.

7. The use of claim 6, wherein the di-functional alkoxysilane is of formula (2), wherein the R groups are identical and represent methyl, ethyl, propyl or butyl and the R' and R" groups are identical and represent methyl, ethyl, propyl or butyl.

8. The use of any of claims 6 or 7, wherein the di-functional alkoxysilane is dimethyl diethoxysilane (DMDES).

9. A process of sealing a window of a liquid-based optical device on the packaging of said device, which process comprises the steps of:
a) providing a least one silicon alkoxide precursor diluted in a solvent at a concentration higher than 0.5 mole/L;
b) adding acidic water to perform hydrolysis over a period ranging from 1 hour to 3 days, generally for about 24 hours, in a thermostated vessel, at a temperature equal or higher than ambient temperature, until a "sol" is obtained;
c) optionally activating the reactive functions of the sol obtained in step b);
d) optionally concentrating the sol under primary vacuum until a concentration (a silicon atom concentration) of at least 1.5cₒ to 3cₒ is obtained, advantageously until a concentration of about 1.5cₒ to 2cₒ is obtained;
e) dispensing the obtained sol onto at least one part of the packaging, or onto at least one part of the window, or both;
f) positioning the window on the packaging;
g) applying a pressure;
h) allowing to dry until the solvent is substantially or completely removed;
i) curing the sol; and
j) recovering the packaging comprising the sealed window.

10. The process of claim 9, wherein said silicon alkoxide precursor comprises one or more mono-functional alkoxysilane(s) and/or one or more di-functional alkoxysilane(s) and/or one or more tri-functional alkoxysilane(s).

11. The process of claim 9 or 10, wherein dispensing the sol is realised by a spin coating technique.

12. The process of any of claims 9 to 11, wherein the drying and curing steps are carried out by applying heat.

13. The process of any of claims 9 to 12, wherein the packaging has a metallic surface that is prepared by carrying out one or a combination of more than one of the following processes:
- degreasing and activation by a chemical process such as Piranha (H₂SO₄/H₂O₂ solution at 80%/20% v/v, at 80°C as a cleaning bath), sulpho-oxalic acid or sulpho-chromic acid bath,
- degreasing and activation by a physical process, such as O₂ plasma process,
- deposition of oxide particles (typically silica) by flaming or sputtering process,
- coating with a coupling agent able to react with the remaining F groups of the hybrid material.

14. A liquid-based optical device comprising a packaging with at least one window sealed to said packaging and a sealant between the window and the packaging, said sealant being as defined in any of claims 1-8 or being obtained by the process as defined in any of claims 9-13.

15. The liquid-based optical device of claim 14 comprising a liquid-liquid interface moveable by electrowetting.

16. The liquid-based optical device according to claims 15 or 16 which is a variable focus optical liquid lens.

17. A set or apparatus comprising the liquid-based optical device of any of claims 14 to 16, and a driver or electronic means for controlling said device.

18. The apparatus of claim 17, which is a camera, a cell phone, an endoscope, a telemeter or a dental video.
